# EUROPÄISCHE PATENTSCHRIFT

(11) **EP 1 575 753 B1**
(45) Veröffentlichungstag und Bekanntmachung des Hinweises auf die Patenterteilung: **30.08.2017**
(21) Anmeldenummer: 03782374.7
(22) Anmeldetag: 11.12.2003
(51) Int. Cl.: B29C 45/00

(54) **VORRICHTUNG ZUM MESSEN, ÜBERWACHEN UND/ODER REGELN EINER TEM PERATUR**
DEVICE FOR MEASURING, MONITORING AND/OR CONTROLLING A TEMPERATURE
DISPOSITIF SERVANT A MESURER, SURVEILLER ET/OU REGULER UNE TEMPERATURE

(30) Priorität: 11.12.2002 DE 10258100
(43) Veröffentlichungstag der Anmeldung: 21.09.2005
(73) Patentinhaber: Priamus System Technologies AG, 8200 Schaffhausen (CH)
(72) Erfinder: DREHER, David, CH-8413 Neftenbach (CH); BADER, Christopherus, CH-8413 Neftenbach (CH)
(74) Vertreter: Patentanwälte und Rechtsanwalt Weiß, Arat & Partner mbB
(86) Internationale Anmeldenummer: PCT/EP2003/014092
(87) Internationale Veröffentlichungsnummer: WO 2004/052613

(56) Entgegenhaltungen:
- EP-A1- 0 546 786
- DE-A1- 19 709 609
- DE-B- 1 640 840
- GB-A- 1 027 219
- US-A- 3 811 958
- US-A1- 2001 026 577
- PATENT ABSTRACTS OF JAPAN Bd. 009, Nr. 164 (M-395), 10. Juli 1985 (1985-07-10) & JP 60 040217 A (MATSUSHITA DENKO KK), 2. März 1985 (1985-03-02)
- PATENT ABSTRACTS OF JAPAN Bd. 009, Nr. 079 (P-347), 9. April 1985 (1985-04-09) & JP 59 210333 A (MATSUSHITA DENKI SANGYO KK), 29. November 1984 (1984-11-29)

## Beschreibung

Die Erfindung betrifft eine Vorrichtung zum Messen, Überwachen und/oder Regeln einer Temperatur, insbesondere der Temperatur der Werkzeugwand eines Spritzgiesswerkzeugs, entsprechend dem Oberbegriff von Anspruch 1.

### Stand der Technik

Das Messen, Überwachen und Regeln einer Temperatur ist in vielen Fertigungsbereichen wichtig und notwendig. Nur beispielhaft wird die Überwachung der Temperatur eines Spritzgiesswerkzeuges erwähnt, wie dies beispielsweise in der DE 101 14 228 A1 und der JP 60040217 aufgeführt wird. Über entsprechende Thermomesselemente, welche die Werkzeugwandtemperatur ermitteln, wird der gesamte Spritzvorgang gesteuert. Aus diesem Grunde sind diese Thermomesselemente von höchster Wichtigkeit.

Bei bekannten Thermomesselementen befindet sich die entsprechende Zuleitung lose in einem Sensorkörper (z. B. DE 197 09 609 A1), wobei die Messelemente aus der Stirnfläche des Sensorkörpers herausragen und dort mit einem Schweisstropfen od. dgl. (siehe JP 59210333) festgelegt sind. Daraus ergibt sich eine Unregelmässigkeit der Stirnfläche durch die Schicht des Schweissbuckels zwischen zu messendem Medium und Messelement, was zu erheblichen Ungenauigkeiten des Sensors führt.

Aus der EP 0 546 786 A1 ist ferner ein thermisches Messelement bekannt, bei dem eine Sensorspitze in einem dünnen Röhrchen steckt. Die Sensorspitze ist dort durch gestauchte Bereiche geführt und hat einen Gleitsitz.

Ferner ist auf der Ausgleichsleitung eine dicke Fassungshülse vorgesehen, welche den Übergang von einem Metallrohr zwischen Fassungshülse und Sensorkörper zu einem flexiblen Kabel bildet. Diese Fassungshülse dient auch der Zugentlastung der Messelemente im Sensorkörper. Sie hat aber den Nachteil, dass für sie im Spritzgiesswerkzeug ein Raum freigelassen werden muss, der eine Schwächung des Werkzeugs darstellt.

### Aufgabe

Der vorliegenden Erfindung liegt die Aufgabe zugrunde, eine Vorrichtung und ein Verfahren zum Herstellen dieser Vorrichtung zu schaffen, wodurch diese Nachteile vermieden werden. Es soll eine gesicherte Festlegung der Messelemente erfolgen, ohne dass die Genauigkeit beeinträchtigt ist. Ferner soll die Vorrichtung so dünn wie möglich gehalten werden, damit eine geringst mögliche Schwächung des Spritzgiesswerkzeuges stattfindet (Kabelkanal).

### Lösung der Aufgabe

Zur Lösung dieser Aufgabe führen die kennzeichnenden Merkmale des Anspruchs 1. Hierdurch wird gewährleistet, dass die Messelemente in ihrer gewünschten Lage verbleiben, ohne dass sie durch Schweissstellen festgelegt werden müssen. Durch das Krimpen findet eine Zugentlastung der Messelemente statt. Es bedarf keiner dicken Fassungshülse, so dass die gesamte Ausgleichsleitung dünner gehalten werden kann.

In manchen Fällen kann es auch genügen, wenn nur die Ausgleichsleitung in der Krimphülse festgelegt wird. Allerdings könnten dann die Messelemente in den Bohrungen im Sensorkörper noch zurückweichen, wenn beispielsweise ein Druck von der Stirnfläche her ausgeübt wird. Deshalb wird in einem bevorzugten Ausführungsbeispiel sowohl der Sensorkörper als auch die Krimphülse gekrimpt.

Sollte es möglich sein, die Messelemente so in die Bohrungen im Sensorkörper einzuführen, dass ihre Stirnflächen exakt in der Ebene der Stirnfläche des Sensorkörpers liegen, so genügt es, wenn sie nur in die Bohrungen eingeschoben werden und dann der Krimpvorgang durchgeführt wird. Um aber ein exaktes Positionieren der Stirnflächen der Messelemente in der Ebene der Stirnfläche des Sensorkörpers zu erreichen, hat es sich als ratsam erwiesen, die Messelemente geringfügig über die Stirnfläche des Sensorkörpers hinausschauen zu lassen und sie dort mit einem Schweiss- oder Löttropfen festzulegen. Nunmehr kann der Krimpvorgang vollzogen werden, danach wird der Schweiss- oder Löttropfen zusammen mit den Enden der Messelemente abgeschliffen, so dass sicher gewährleistet ist, dass die Stirnflächen der Messelemente schlussendlich in der Ebene der Stirnfläche des Sensorkörpers liegen. Allerdings ist es in diesem Fall nicht unbedingt notwendig, die Messelemente festzulegen. Deshalb wird auch separat dafür Schutz begehrt, dass die Messelemente aus der Bohrung herausschauen, ggf. mit einem Schweiss- oder Löttropfen überzogen und abgeschliffen werden.

In einem bevorzugten Ausführungsbeispiel weist die Ausgleichsleitung eine Aussenisolation aus Glasseide/Kapton auf. Diese Aussenisolation isoliert die Ausgleichsleitung gegenüber dem heissen Spritzgiesswerkzeug.

Ferner ist vorgesehen, dass an die Krimphülse ein Auszugsgewinde anschliesst, wodurch mit einem entsprechenden Werkzeug ein einfaches Ausziehen des Sensorkörpers aus beispielsweise einer Bohrung in dem Spritzgiesswerkzeug erfolgt.

### Figurenbeschreibung

Weitere Vorteile, Merkmale und Einzelheiten der Erfindung ergeben sich aus der nachfolgenden Beschreibung bevorzugter Ausführungsbeispiele sowie anhand de Zeichnung; diese zeigt in
Figur 1 eine Draufsicht auf eine erfindungsgemässe Vorrichtung zum Überwachen einer Temperatur;
Figur 2 einen vergrössert dargestellten Querschnitt des vorderen Bereichs der Vorrichtung gemäss Figur 1;
Figur 3 einen nochmals vergrösserten Querschnitt aus dem Bereich der Spitze der Vorrichtung gemäss Figur 1 in einer Vorstufe ihrer Herstellung.
Figur 4 einen schematisch dargestellten Querschnitt durch ein weiteres Ausführungsbeispiel eine Spitze einer Vorrichtung gemäss Figur 1.

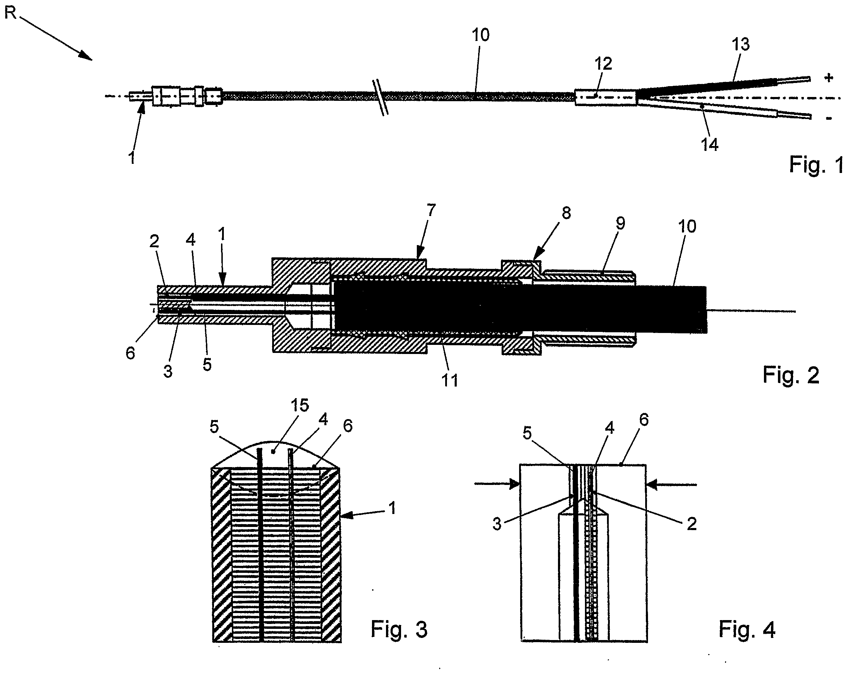

Eine erfindungsgemässe Vorrichtung R zum Messen der Temperatur beispielsweise der Werkzeugwand eines Spritzgiesswerkzeuges weist gemäss den Figuren 1 und 2 einen Sensorkörper 1 auf, in welchem zwei Längsbohrungen 2 und 3 vorgesehen sind. In jeder Längsbohrung 2 und 3 befindet sich ein Messelement4 bzw. 5, die mit ihren Spitzen in der Ebene der Stirnfläche 6 des Sensorkörpers 1 liegen.

An den Sensorkörper 1 schliesst eine Krimphülse 7 an, auf die ein Auszugstück 8 mit einem Auszuggewinde 9 aufgesteckt ist. Krimphülse 7 und Auszugstück 8 umfangen eine Ausgleichsleitung 10, wobei zwischen Ausgleichsleitung 10 und Krimphülse 7 noch eine Isolierhülse 11 vorgesehen ist.

Aus der Ausgleichsleitung 10 ragen die beiden Messelemente 4 und 5 heraus und greifen in die Längsbohrungen 2 und 3 ein.

Am anderen Ende endet die Ausgleichleitung 10 in einer Hülse 12 und zweigt sich dort in die Anschlussleitungen 13 und 14 auf.

Die Herstellungsweise für die erfindungsgemässe Vorrichtung wird nachfolgend u. a. auch anhand der Figuren 3 und 4 näher beschrieben:
Auf das freie Ende der Ausgleichsleitung 10 jenseits der Hülse 12 werden das Auszugsstück 8, die Krimphülse 7 und der Sensorkörper 1 aufgeschoben. Dabei ist darauf zu achten, dass die Messelemente 4 und 5 ihre Längsbohrungen 2 und 3 finden. Die Messelemente 4 und 5 können dabei, wie in Figur 3 gezeigt, aus der Stirnfläche 6 des Sensorkörpers herausragen.

Auf die Stirnfläche 6 wird nun eine definierte Schweissstelle 15 mit grossen Toleranzen aufgebracht. Danach erfolgt ein Abschleifen dieser Schweissstelle 15 bzw. des Schweissbuckels auf die Höhe der planen Stirnfläche 6.

In Figur 4 ist dagegen angedeutet, dass die Messelemente 4 und 5 in der Ebene der Stirnfläche 6 enden. Danach wird der vordere Bereich, wie durch die Pfeile angedeutet, zusammengepresst bzw. gekrimpt, wodurch sich die Möglichkeit einer klar definierten Temperaturmessung ergibt. Noch besser als beim Schweissen sind die Messelemente 4 und 5 durch das Krimpen ortsfest in den Längsbohrungen 2 und 3 festgelegt, so dass sie nicht aus den Längsbohrungen 2 und 3 herausgezogen werden können. Dieses Verfahren ermöglicht die nachträgliche Bearbeitung der Sensorfront durch den Anwender, um diese an die Oberfläche der Kavität anzupassen.

In einem bevorzugten Ausführungsbeispiel findet ferner auch ein Krimpen der Krimphülse 7 statt, wodurch die Ausgleichsleitung 10 bzw. deren vorderer Bereich in der Krimphülse 7 festgelegt wird. Auch dies dient der Zugentlastung der Ausgleichsleitung 10. Das Krimpen der Krimphülse 7 geschieht natürlich erst dann, wenn die Krimphülse 7 auf den Sensorkörper 1 aufgesteckt ist.

Das Auszugsstück 8 kann schon vorher mit der Krimphülse 7, beispielsweise durch Schweissen oder Kleben, verbunden sein, es könnte aber auch eine Gewindeverbindung vorgesehen werden. Auf das Auszugsgewinde 9 des Auszugstücks 8 kann ein entsprechendes Werkzeug aufgeschraubt werden, um Krimphülse 7 und Sensorkörper 1 aus einer Gebrauchslage in der Werkzeugwand eines Spritzgiesswerkzeuges zu ziehen.

Das Auszugsstück 8 kann schon vorher mit der Krimphülse 7, beispielsweise durch Schweissen oder Kleben, verbunden sein, es könnte aber auch eine Gewindeverbindung vorgesehen werden. Auf das Auszugsgewinde 9 des Auszugstücks 8 kann ein entsprechendes Werkzeug aufgeschraubt werden, um Krimphülse 7 und Sensorkörper 1 aus einer Gebrauchslage in der Werkzeugwand eines Spritzgiesswerkzeuges zu ziehen.

**Positionszahlenliste**

| | | | | | |
|---|---|---|---|---|---|
| 1 | Sensorkörper | 34 | | 67 | |
| 2 | Längsbohrung | 35 | | 68 | |
| 3 | Längsbohrung | 36 | | 69 | |
| 4 | Messelement | 37 | | 70 | |
| 5 | Messelement | 38 | | 71 | |
| 6 | Stirnfläche | 39 | | 72 | |
| 7 | Krimphülse | 40 | | 73 | |
| 8 | Auszugstück | 41 | | 74 | |
| 9 | Auszuggewinde | 42 | | 75 | |
| 10 | Ausgleichsleitung | 43 | | 76 | |
| 11 | Isolierhülse | 44 | | 77 | |
| 12 | Hülse | 45 | | 78 | |
| 13 | Anschlussleitung | 46 | | 79 | |
| 14 | Anschlussleitung | 47 | | | |
| 15 | Schweissstelle | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | R | Vorrichtung |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Messen, Überwachen und/oder Regeln einer Temperatur, insbesondere der Temperatur der Werkzeugwand eines Spritzgiesswerkzeuges mittels mindestens zwei Messelementen (4, 5), welche einen Sensorkörper (1) in entsprechenden Bohrungen (2, 3) in diesem zumindest bis zu dessen Aussenwandungen (6) durchziehen,
**dadurch gekennzeichnet,**
**dass** die Messelemente (4, 5) in einer dem Sensorkörper vorgeschalteten Krimphülse (7) festgeklemmt sind und in der Krimphülse (7) eine Ausgleichsleitung (10) angeordnet ist, aus der die Messelemente (4, 5) in den Sensorkörper (1) ragen.

2. Vorrichtung nach Anspruch 1, **dadurch gekennzeichnet, dass** die Ausgleichsleitung (10) eine Aussenisolation aus Glasseide/Kapton aufweist.

3. Vorrichtung nach Anspruch 2, **dadurch gekennzeichnet, dass** an die Krimphülse (7) ein Auszugsgewinde (9) anschliesst.

4. Verfahren zur Montage einer Vorrichtung nach wenigstens einem der Ansprüche 1 bis 3, **dadurch gekennzeichnet, dass** die Messelemente (4, 5) im Sensorkörper (1) durch Verringerung des Querschnitts der Bohrungen (2, 3) festgeklemmt werden.

5. Verfahren zur Montage einer Vorrichtung nach wenigstens einem der Ansprüche 1 bis 3, **dadurch gekennzeichnet, dass** dem Sensorköper (1) eine Krimphülse (7) angesetzt wird, deren Innenraum von einer Ausgleichsleitung (20) mit den Messelementen (4,5) durchzogen wird, wobei der Querschnitt des Innenraums der Krimphülse (7) zumindest teilweise verringert und damit die Ausgleichsleitung (10) in dem Innenraum festgelegt wird.

6. Verfahren zur Montage einer Vorrichtung nach wenigstens einem der Ansprüche 1 bis 3, **dadurch gekennzeichnet, dass** die Messelemente (4, 5) etwas aus den Bohrungen (2, 3) herausschauen, und danach abgeschliffen werden.

7. Verfahren zur Montage einer Vorrichtung nach wengistens einem der Ansrpüche 1 bis 3, **dadurch gekennzeichnet, dass** die Messelemente (4, 5) etwas aus den Bohrungen (2, 3) herausschauen, mit einem Schweiss- oder Löttropfen überzogen und dieser zusammen mit den Messelementen (4, 5) abgeschliffen wird.

8. Verfahren nach Anspruch 6 oder 7, **dadurch gekennzeichnet, dass** das Abschleifen bis auf die Ebene der Aussenwandung (6) durchgeführt wird.

## Claims

1. Apparatus for measuring, monitoring and/or regulating a temperature, in particular the temperature of the mould wall of an injection mould, by means of at least two measuring elements (4, 5) which pass through a sensor body (1) in corresponding bores (2, 3) in the sensor body (1) at least as far as its outer walls (6),
**characterised in that**
the measuring elements (4, 5) are firmly clamped in a crimping sleeve (7) preceding the sensor body and an equalising line (10) is arranged in the crimping sleeve (7), from which equalising line (10) the measuring elements (4, 5) project into the sensor body (1).

2. Apparatus according to claim 1, **characterised in that** the equalising line (10) has external insulation made of glass silk/Kapton.

3. Apparatus according to claim 2, **characterised in that** an extraction thread (9) is adjacent to the crimping sleeve (7).

4. Method for assembling an apparatus according to at least one of claims 1 to 3, **characterised in that** the measuring elements (4, 5) are firmly clamped in the sensor body (1) by reducing the cross section of the bores (2, 3)

5. Method for assembling an apparatus according to at least one of claims 1 to 3, **characterised in that** a crimping sleeve (7) is attached to the sensor body (1), through the interior of which crimping sleeve (7) an equalising line (20) with the measuring elements (4,5) is passed, the cross section of the interior of the crimping sleeve (7) being at least partially reduced and thus the equalising line (10) being fixed in the interior.

6. Method for assembling an apparatus according to at least one of claims 1 to 3, **characterised in that** the measuring elements (4, 5) protrude a little from the bores (2, 3), and thereafter are ground off.

7. Method for assembling an apparatus according to at least one of claims 1 to 3, **characterised in that** the measuring elements (4, 5) protrude a little from the bores (2, 3), are covered with a weld or solder droplet and the weld or solder droplet is ground off together with the measuring elements (4, 5).

8. Method according to claim 6 or 7, **characterised in that** the grinding off is carried out as far as the plane of the outer wall (6).

## Revendications

1. Dispositif servant à mesurer, surveiller et/ou réguler une température, en particulier la température de la paroi de moule d'un moule d'injection au moyen d'au moins deux éléments de mesure (4, 5) qui passent à travers un corps de capteur (1) dans des alésages correspondants (2, 3) dans ce dernier au moins jusqu'à ses parois extérieures (6),
**caractérisé par le fait**
**que** les éléments de mesure (4, 5) sont fixés dans un manchon de sertissage en amont du corps de capteur (7) et que dans le manchon de sertissage (7) est disposé une câble de compensation (10) à partir duquel les éléments de mesure (4, 5) pénètrent dans le corps de capteur (1).

2. Dispositif selon la revendication 1, **caractérisé par le fait que** le câble de compensation (10) présente une isolation extérieure en soie de verre/Kapton.

3. Dispositif selon la revendication 2, **caractérisé par le fait qu'**au manchon de sertissage (7) vient se raccorder un filetage d'extraction (9).

4. Procédé de montage d'un dispositif selon au moins l'une des revendications 1 à 3, **caractérisé par le fait que** les éléments de mesure (4, 5) sont fixés dans le corps de capteur (1) par réduction de la section des alésages (2, 3).

5. Procédé de montage d'un dispositif selon au moins l'une des revendications 1 à 3, **caractérisé par le fait que** sur le corps de capteur (1) est placé un manchon de sertissage (7) dont l'espace intérieur est traversé par un câble de compensation (20) avec les éléments de mesure (4,5), que la section de l'espace intérieur du manchon de sertissage (7) se réduit au moins partiellement et que, de ce fait, le câble de compensation (10) est fixé dans l'espace intérieur.

6. Procédé de montage d'un dispositif selon au moins l'une des revendications 1 à 3, **caractérisé par le fait que** les éléments de mesure (4, 5) ressortent quelque peu des alésages (2, 3) et sont ensuite poncés.

7. Procédé de montage d'un dispositif selon au moins l'une des revendications 1 à 3, **caractérisé par le fait que** les éléments de mesure (4, 5) ressortent quelque peu des alésages (2, 3), sont revêtus d'une goutte de soudure ou de brasure et que cette dernière est poncée ensemble avec les éléments de mesure (4, 5).

8. Procédé selon la revendication 6 ou 7, **caractérisé par le fait que** le ponçage est réalisé jusqu'au niveau de la paroi extérieure (6).
